# EUROPÄISCHE PATENTSCHRIFT

(11) **EP 3 953 865 B1**
(45) Veröffentlichungstag und Bekanntmachung des Hinweises auf die Patenterteilung: **04.12.2024**
(21) Anmeldenummer: 20714981.6
(22) Anmeldetag: 24.03.2020
(51) Int. Cl.: G06N 3/045, G06N 3/098

(54) **VERFAHREN, VORRICHTUNG UND COMPUTERPROGRAMM ZUM BETREIBEN EINES TIEFEN NEURONALEN NETZES**
METHOD, DEVICE, AND COMPUTER PROGRAM FOR OPERATING A DEEP NEURAL NETWORK
PROCÉDÉ, DISPOSITIF ET PROGRAMME INFORMATIQUE DE FONCTIONNEMENT D'UN RESEAU NEURONAL PROFOND

(30) Priorität: 09.04.2019 DE 102019205081
(43) Veröffentlichungstag der Anmeldung: 16.02.2022
(73) Patentinhaber: Robert Bosch GmbH, 70442 Stuttgart (DE)
(72) Erfinder: PFEIL, Thomas, 71272 Renningen (DE); FISCHER, Volker, 71229 Leonberg (DE)
(86) Internationale Anmeldenummer: PCT/EP2020/058191
(87) Internationale Veröffentlichungsnummer: WO 2020/207786

(56) Entgegenhaltungen:
- CHEN ZHILU ET AL: "End-to-end learning for lane keeping of self-driving cars", 2017 IEEE INTELLIGENT VEHICLES SYMPOSIUM (IV), IEEE, 11 June 2017 (2017-06-11), pages 1856 - 1860, XP033133953, DOI: 10.1109/IVS.2017.7995975
- TEERAPITTAYANON SURAT ET AL: "BranchyNet: Fast inference via early exiting from deep neural networks", 2016 23RD INTERNATIONAL CONFERENCE ON PATTERN RECOGNITION (ICPR), IEEE, 4 December 2016 (2016-12-04), pages 2464 - 2469, XP033085956, DOI: 10.1109/ICPR.2016.7900006
- ZHI ZHANG ET AL: "Progressive Neural Networks for Image Classification", ARXIV.ORG, CORNELL UNIVERSITY LIBRARY, 201 OLIN LIBRARY CORNELL UNIVERSITY ITHACA, NY 14853, 25 April 2018 (2018-04-25), XP081230148
- BO CHANG ET AL: "Multi-level Residual Networks from Dynamical Systems View", ARXIV.ORG, CORNELL UNIVERSITY LIBRARY, 201 OLIN LIBRARY CORNELL UNIVERSITY ITHACA, NY 14853, 28 October 2017 (2017-10-28), XP081319381

## Beschreibung

### Technisches Gebiet

Die Erfindung betrifft ein Verfahren zum Betreiben eines tiefen neuronalen Netzes. Ebenso betrifft die Erfindung eine Vorrichtung und ein Computerprogramm, die jeweils eingerichtet sind, das Verfahren auszuführen.

### Stand der Technik

Die Autoren Fischer, V., Köhler, J. und Pfeil, T. offenbaren in ihrer Publikation "The streaming rollout of deep networks-towards fully model-parallel execution" In Advances in Neural Information Processing Systems (pp. 4043-4054) ein Verfahren, um tiefe neuronale Netz vollständig parallelisiert betreiben zu können. DE 20 2018 104 373 offenbart eine Vorrichtung zum Ausführen eines Verfahrens, bei welchem einem maschinellen Lernsystem ein vorgebbares Steuerungsmuster zugewiesen wird, das eine Reihenfolge charakterisiert, nach welcher Schichten des maschinellen Lernsystem ihre Zwischengrößen ermitteln.

Teerapittayanon S. et al: "BranchyNet: Fast inference via early exiting from deep neural networks", 2016 23RD INTERNATIONAL CONFERENCE ON PATTERN RECOGNITION (ICPR), IEEE, 4. Dezember 2016 (2016-12-04), DOI: 10.1109/ICPR.2016.7900006, stellt BranchyNet vor, eine neue tiefe neuronale Netzarchitektur, welche um weitere seitliche Klassifizierungsäste erweitert ist.

Da üblicherweise mobile Endgeräte ein beschränktes Energiebudget haben, ist es wünschenswert, dass beim Betreiben von tiefen neuronalen Netzen auf diesen Endgeräten möglichst wenig Energie verbraucht wird. Der Vorteil des erfindungsgemäßen Verfahrens ist, dass die tiefen neuronalen Netze zumindest teilweise sukzessive ausgeführt werden, um energiesparsam zu sein und dennoch genaue Ergebnisse zu liefern. Ein weiterer Vorteil des erfindungsgemäßen Verfahrens ist, dass ein tiefes neuronales Netz, das sukzessive ausgeführt wird, weniger Speicher als mehrere tiefe neuronale Netze benötigt, welche für jeweilige (Energie- oder Zeit-) Budgets optimiert sind. Ein Vorteil des zumindest teilweise sukzessiven Ausführens des tiefen neuronalen Netzes ist eine niedrige Latenz vom Eingangs- zum Ausgangssignalen. Das erste "grobe" Ergebnis wird dann durch Hinzufügen weiterer Pfade verfeinert.

### Offenbarung der Erfindung

In einem ersten Aspekt der Erfindung wird ein, insbesondere computerimplementiertes, Verfahren zum Betreiben eines tiefen neuronalen Netzes mit zumindest einer Überbrückungsverbindung gemäß dem unabhängigen Anspruch 1 vorgestellt. Das Verfahren umfasst unter anderem die Schritte: Auswählen eines ersten Pfades, der eine Abfolge von Schichten entlang zumindest eines Teils einer vorgebbaren Reihenfolge der Schichten des tiefen neuronalen Netzes unter Verwendung der Überbrückungsverbindung charakterisiert. Daraufhin folgt ein Ermitteln einer Ausgangsgröße mittels Propagierens einer Eingangsgröße entlang des ersten Pfades. Daraufhin folgt ein Prüfen, ob die Ausgangsgröße einem vorgebbaren Kriterium entspricht. Wenn das vorgebbare Kriterium nicht erfüllt ist, dann wird ein weiterer Pfad durch das tiefe neuronale Netz gewählt, der sich vom ersten Pfad unterscheidet, bspw. der um zumindest eine Schicht länger ist als der erste Pfad. Vorzugsweise unterscheidet sich der zweite Pfad vom ersten Pfad darin, dass die Abfolge der Schichten des zweiten Pfades wenigstens eine der Schichten des tiefen neuronalen Netzes, die nicht im ersten Pfad enthalten ist, insbesondere zusätzlich zu den Schichten des ersten Pfades, aufweist. Die Eingangsgröße wird daraufhin entlang des zweiten Pfades propagiert. Denkbar ist auch, dass Pfade gleicher Länge durch das tiefe neuronale Netz gewählt werden, wenn dessen Architektur Pfade gleicher Länge ermöglicht.

Die Überbrückungsverbindung (engl. skip-connection) verbindet eine der Schichten des tiefen neuronalen Netzes zusätzlich mit einer weiteren, insbesondere nachfolgenden, Schicht der vorgebbaren Reihenfolge, in der die Schichten des tiefen neuronalen Netzes nacheinander angeordnet sind.

Die weitere Schicht ist in der vorgebbaren Reihenfolge keine unmittelbar nachfolgende Schicht der Schicht mit der Überbrückungsverbindung.

Der Pfad, insbesondere ein Signallaufpfad, charakterisiert eine unterbrechungsfreie, vorwärtsgerichtet Abfolge einer Mehrzahl der Schichten des tiefen neuronalen Netzes. D.h. der Pfad charakterisiert, wie diese Mehrzahl der Schichten des tiefen neuronalen Netzes nacheinander verbunden sind, um die Eingangsgröße durch das tiefe neuronale Netz beginnend bei einer Eingangsschicht, der Schicht des tiefen neuronalen Netzes, die die Eingangsgröße des tiefen neuronalen Netzes aufnimmt, bis zu einer Ausgangsschicht, welche die Ausgangsgröße des tiefen neuronalen Netzes ausgibt, zu propagieren.

Es sei angemerkt, dass die Schichten, die den jeweiligen Pfad bilden, ihre Zwischengröße jeweils nur abhängig von zumindest einer ihnen bereitgestellten Zwischengröße zumindest einer der (unmittelbar) vorhergehenden verbundenen Schicht dieses Pfades ermitteln. Es sei ferner angemerkt, dass die Schicht des jeweiligen Pfades, die in der Reihenfolge der Schichten des tiefen neuronalen Netzes mit mehr als einer vorherigen Schicht verbunden ist, ihre Zwischengröße nur abhängig von der unmittelbar vorherigen ermittelten Zwischengröße der unmittelbar vorherigen verbundenen Schicht gemäß diesem Pfad ermittelt. Unter einer Zwischengröße wird eine Ausgangsgröße der Schicht verstanden, wobei diese Ausgangsgröße als Eingangsgröße der nachfolgenden verbundenen Schicht bereitgestellt wird.

Unter Propagieren entlang des Pfades wird verstanden, dass die Eingangsgröße durch das tiefe neuronale Netz entlang der festgelegten Abfolge der Schichten dieses Pfades verarbeitet wird.

Der Vorteil dieses Aspekts ist, dass beim Betreiben des tiefen neuronalen Netzes Energie eingespart wird, da nicht alle Schichten des tiefen neuronalen Netzes benötigt werden, sondern nur die Schichten der jeweiligen Pfade verwendet werden. Ein weiterer Vorteil ist, dass der Energiebedarf dynamisch geregelt werden kann, je nachdem welche unterschiedlichen Pfade von möglichen Pfade durch das tiefe neuronale Netz gewählt werden. Folglich kann die Tiefe des tiefen neuronalen Netzes dynamisch nach vorgebbaren Bedingungen angepasst werden, um dennoch eine zuverlässigere Verarbeitung der Eingangsgröße zu gewährleisten.

Es wird vorgeschlagen, dass beim Propagieren der Eingangsgröße entlang der Pfade, diejenigen Schichten des neuronalen Netzes, die nicht für den jeweiligen verwendeten Pfad benötigt werden, deaktiviert sind und erst dann aktiviert werden, wenn diejenige Schicht für den jeweiligen Pfad benötigt wird.

Unter deaktivierten Schichten kann verstanden werden, dass diese nicht aus einem Speicher geladen werden müssen und damit keine weiteren Ressourcen eines Computers beanspruchen. Falls das tiefe neuronale Netz rein in Hardware implementiert ist, kann unter einer deaktivierten Schicht verstanden werden, dass das zugehörige Hardwaremodul dieser Schicht keine Rechenoperationen ausführt, auch wenn z.B. an dem Modul geeignete Daten anliegen.

Durch die Deaktivierung werden die jeweiligen Rechenoperationen für diese Schicht nicht ausgeführt. Damit kann das tiefe neuronale Netz die Eingangsgröße besonders energieeffizient verarbeiten.

Weiterhin wird vorgeschlagen, dass beim Propagieren entlang des zweiten Pfades, diejenigen Schichten, um die sich der zweite Pfad vom ersten Pfad unterscheidet, ihre Zwischengrößen ermittelten. Ferner wird vorgeschlagen, dass beim Propagieren entlang des zweiten Pfades des Weiteren diejenigen Schichten des zweiten Pfades, welche mit mehr als einer vorherigen Schicht im tiefen neuronalen Netz verbunden sind und auch im ersten Pfad enthalten waren, ihre Zwischengrößen abhängig von einer bereitgestellten Zwischengröße der jeweiligen unmittelbar vorhergehenden verbunden Schicht des zweiten Pfades und einer vorherigen bereitgestellten Zwischengröße der unmittelbar vorhergehenden verbunden Schicht des ersten Pfades, ermitteln. Vorteilhafterweise wird die vorherige bereitgestellte Zwischengröße wiederverwendet, also nicht erneut berechnet.

Die vorherige bereitgestellte Zwischengröße ist diejenige Zwischengröße, die dieser Schicht beim Propagieren der Eingangsgröße entlang des ersten Pfades bereitgestellt wurde.

Es sei angemerkt, dass die Schichten, die mit mehr als einer vorherigen Schicht verbunden sind, ihre Zwischengrößen auch mit bereits vorhergehenden verwenden Zwischengrößen, die entlang des ersten Pfades ermittelt wurden, miteinander kombiniert werden können, bspw. mit einer math. Operation mean(), max(),add(),concat().

Der Vorteil hierbei ist, dass ein unnötiges erneutes Berechnen der Zwischengrößen für die gleiche Eingangsgröße vermieden werden kann, wodurch eine noch sparsamere Verwendung der zur Verfügung stehenden, begrenzten Ressourcen ermöglicht wird.

Weiterhin wird vorgeschlagen, dass die Ausgangsgröße mittels Propagierens der Eingangsgröße des tiefen neuronalen Netzes gleichzeitig entlang des ersten und des zweiten Pfades ermittelt wird. Die gemeinsamen Schichten des ersten und zweiten Pfades können genau einmal auf genau einer Recheneinheit ausgeführt werden. Die gemeinsamen Schichten sind die Schichten, deren jeweilige Position in der vorgebbaren Reihenfolge der Schichten des tiefen neuronalen Netzes der gleichen Position in der Abfolge der Schichten des ersten Pfades und in der Abfolge der Schichten zweiten Pfades entspricht.

Bevorzugt werden die Zwischengrößen derjenigen Schichten der verbleibenden Schichten, die in beiden Abfolgen der Schichten des ersten und zweiten Pfades enthalten sind und jeweils unterschiedliche Positionen in den Abfolgen der Schichten des ersten und im zweiten Pfades haben, bei einem wiederholten Ausführen dieser Schichten abhängig von der vorherigen bereitgestellten Zwischengröße, welche beim ersten Ermitteln der Zwischengröße gemäß der früheren Position der unterschiedlichen Positionen der jeweiligen Schicht verwendet wurde und der bereitgestellten Zwischengröße gemäß der späteren Position der unterschiedlichen Positionen der jeweiligen Schicht, ermittelt.

Die Schichten des ersten und zweiten Pfades ermitteln jeweils nacheinander gemäß ihrer Position in einer Abfolge der Schichten des jeweiligen Pfades ihre Zwischengröße auf einer Recheneinheit. Hierfür kann jeder Schicht eines jeden ausgewählten Pfades jeweils ein Zeitpunkt einer Abfolge von Zeitpunkten, an welchem die jeweilige Schicht ihre Zwischengröße abhängig von einer ihr bereitgestellten Zwischengröße ermittelt, zugeordnet werden. Denjenigen Schichten, die mit mehr als einer vorherigen Schicht verbunden sind, können mehrere unterschiedliche Zeitpunkte zugeordnet sein. Die Zeitpunkte sind dabei die Zeitpunkte zu welchen die Schichten ihre Rechenoperationen auf einer Recheneinheit ausführen. Ferner wird vorgeschlagen, dass beim Ermitteln der Ausgangsgröße die Abfolge der Zeitpunkte beginnt und zu den jeweiligen aktuellen Zeitpunkten alle Schichten der ausgewählten Pfade, denen der Zeitpunkt zugeordnet ist, der dem aktuellen Zeitpunkt entspricht, ihre Zwischengrößen ermitteln. Die Schichten, die mit mehr als einer vorherigen Schicht verbunden sind, ermitteln zu den jeweiligen aktuellen Zeitpunkten, die den ihnen jeweils zugeordneten unterschiedlichen Zeitpunkten entsprechen, jeweils ihre Zwischengröße abhängig von den ihnen bis zu dem jeweiligen Zeitpunkt vorliegenden Zwischengrößen, insbesondere zu vorherigen Zeitpunkten. Jeweils dann, wenn eine Ausgangsgröße ermittelt wurde, wird das vorgebbare Kriterium geprüft. Wenn das Kriterium nicht erfüllt ist, wird das Ausführen der Verarbeitung der Schichten zu den jeweiligen nachfolgenden Zeitpunkten fortgesetzt bis die nächste Ausgangsgröße ausgegeben wird.

Es sei angemerkt, dass die Schichten der ausgewählten Pfade, denen der gleiche Zeitpunkt zugeordnet wurde, gleichzeitig jeweils ihre Zwischengröße ermitteln. Dies hat den vorteilhaften Effekt, dass diese Schichten parallelisiert ausgeführt werden und damit das Verfahren beschleunigen.

Eine Zuordnung der Zeitpunkte kann derart erfolgen, dass zu einem jeden unmittelbar nachfolgenden Zeitpunkt die jeweils unmittelbar nachfolgende verbundene Schicht gemäß dem Pfad ihre Zwischengröße abhängig von der ermittelten Zwischengröße der vorhergehenden verbundenen Schicht ermittelt.

Es kann hier von einem Entkoppeln der Abhängigkeiten zwischen den Schichten gesprochen werden, da die Schicht, die mit mehr als einer vorherigen Schicht verbunden ist, nicht warten muss bis alle benötigten Zwischengrößen vorliegen. Es kann daher von einem gleichzeitigen Betreiben aller Pfad gesprochen werden.

Dadurch, dass das neuronale Netz nur Vorwärtsverbindungen aufweist, werden die Schichten nach dem Ermitteln ihrer Zwischengröße nicht mehr benötigt, und es können vorteilhafterweise mehrere Eingangsgrößen zu jeweils einem Zeitpunkt der Eingangsschicht bereitgestellt und durch das tiefe neuronale Netz propagiert werden. Dadurch werden nicht nur die Pfade parallel betrieben, sondern auch die Eingangsgrößen parallel durch das tiefe neuronale Netz verarbeitet.

Vorteilhafterweise werden die einzelnen Schichten auf jeweils einer eigenen Recheneinheit, insbesondere auf einer parallelisierten Hardware, ausgeführt. Dies erlaubt ein effizientes Betreiben, da wie oben erläutert, das Verfahren effizient die Ressourcen nutzt und zusätzlich durch das parallelisierte Betreiben der Schichten ein effizientes Ausführen der einzelnen Berechnungen erreicht wird.

Ein weiterer Vorteil hierbei ist, dass bei einem parallelisierten Betreiben der Schichten ein höherer Durchsatz der zu verarbeitenden Eingangsgrößen erreicht werden kann, da während die Eingangsgröße durch das tiefe neuronale Netz propagiert wird, können bereits weitere Eingangsgröße durch das tiefe neuronale Netz propagiert werden. Damit ist der zeitliche Abstand zwischen einem Ausgeben der Ausgangsgrößen verkürzt, verglichen zum konventionellen Betreiben der tiefen neuronalen Netze und innerhalb einer gleichen Zeitspanne können mehr Eingangsgrößen verarbeitet werden.

Vorteilhafterweise sind Parameter und Aktivierungen des tiefen neuronalen Netzes quantisiert und wobei der erste Pfad der kürzeste Pfad durch das tiefe neuronale Netz ist.

Weiterhin wird vorgeschlagen, dass jeder Pfad des tiefen neuronalen Netzes getrennt voneinander und/oder zumindest eine Gruppe von Pfaden gemeinsam angelernt werden.

Der Vorteil hierbei ist, dass durch die parallele Optimierung mehrerer Pfade sichergestellt werden kann, dass die Zwischengrößen der einzelnen Pfade nicht degenerieren, wie beispielsweise wenn das komplette tiefe neuronale Netz trainiert wird.

Vorteilhaft ist hierbei ferner, dass das tiefe neuronale Netz nach einem solchen Anlernen robuster gegenüber einem Ausfall eines Pfades oder einer Schicht wird, da die Pfade getrennt voneinander trainiert wurden.

Nachdem das Kriterium erfüllt wurde, wird abhängig von der Ausgangsgröße des tiefen neuronalen Netzes eine Steuergröße ermittelt. Die Steuergröße wird zum Steuern eines Aktors eines technischen Systems verwendet. Das technische System ist eine zumindest teilautonome Maschine, ein zumindest teilautonomes Fahrzeug, ein Roboter, ein Werkzeug, eine Werkmaschine oder ein Flugobjekt wie eine Drohne sein.

In einem weiteren Aspekt der Erfindung wird vorgeschlagen, dass die Eingangsgröße des tiefen neuronalen Netzes eine Größe ist, welche mittels eines Sensors erfasst wurde. Die Sensorgröße wird daraufhin entlang der jeweiligen Pfade durch das tiefe neuronale Netz propagiert.

In einem weiteren Aspekt wird ein Computerprogramm vorgeschlagen. Das Computerprogramm ist eingerichtet, eines der vorherigen genannten Verfahren auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist. Des Weiteren wird eine Vorrichtung vorgeschlagen, die eingerichtet ist eines der Verfahren auszuführen. Ausführungsbeispiele der oben genannten Aspekte sind in den beiliegenden Zeichnungen dargestellt und in der nachfolgenden Beschreibung näher erläutert.

Dabei zeigen:

### Kurze Beschreibung der Zeichnungen

- Fig. 1: eine schematische Darstellung eines tiefen neuronalen Netzes mit einer Mehrzahl von Pfaden durch dieses tiefe neuronale Netz;
- Fig. 2: eine schematische Darstellung eines parallelisierten Ausführens der Pfade;
- Fig. 3: eine schematische Darstellung einer Ausführungsform eines Verfahrens zum Betreiben des tiefen neuronalen Netzes;
- Fig. 4: eine schematische Darstellung einer Ausführungsform eines Roboters, welcher das Verfahren zum Betreiben tiefe neuronale Netz verwendet.

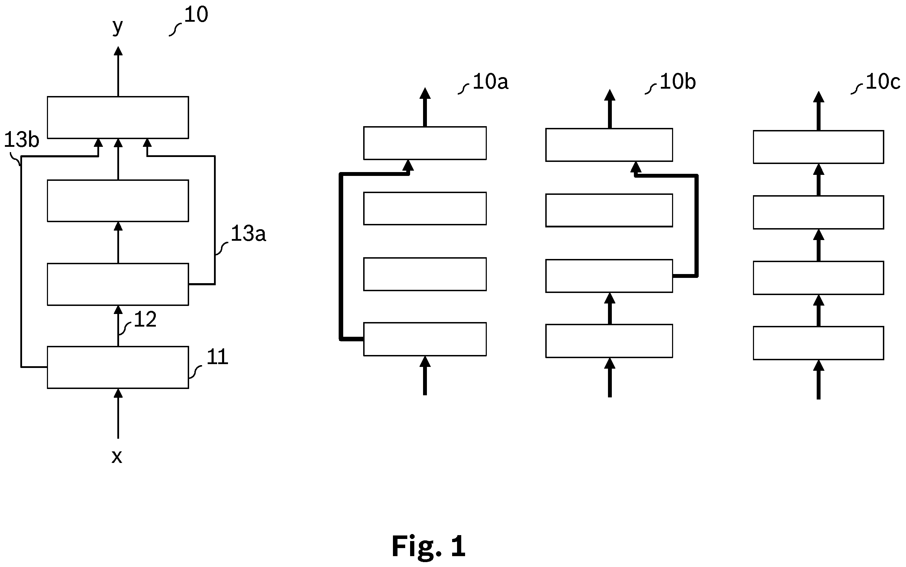

Figur 1 zeigt eine schematische Darstellung eines tiefen neuronalen Netzes (10), welches abhängig von einer Eingangsgröße (x) eine Ausgangsgröße (y) ermittelt. In einer Ausführungsform des tiefen neuronalen Netzes (10) ermittelt das tiefe neuronale Netz (10) abhängig von einem Bild (x) eine Klassifikation (y) des Bildes (x). In einer alternativen Ausführungsform ermittelt das tiefe neuronale Netz (10) abhängig von der Eingangsgröße (x) eine Regression (y).

Wie in Figur 1 dargestellt, ist das tiefe neuronale Netz (10) durch eine Mehrzahl von Schichten (11), die miteinander über Verbindungen (12) verbunden sind, aufgebaut. Es sei angemerkt, dass zumindest zwei Schichten auch zueinander parallelgeschaltet sein können.

Diejenige Schicht, die die Eingangsgröße (x) erhält, wird im Folgenden als Eingangsschicht bezeichnet und diejenige Schicht, die die Ausgangsgröße (y) ausgibt, wird im Folgenden als Ausgangsschicht bezeichnet. Die Verbindungen (12) können mit Gewichten versehen sein, um die ausgegebenen Zwischengrößen der jeweiligen Schichten gewichtet der jeweiligen verbunden nachfolgenden Schicht bereitzustellen.

Die Schichten umfassen jeweils eine Mehrzahl von Neuronen, die jeweils eine vorgebbare Aktivierungsfunktion aufweisen. Alternativ ist wenigstens eine der Schichten als Faltungsschicht (engl. convolutional layer) ausgebildet. Zusätzlich weist das tiefe neuronale Netz (10) in diesem Ausführungsbeispiel zwei Überbrückungsverbindung (13a,13b) auf. Die erste Überbrückungsverbindung (13a) verbindet die unmittelbar nachfolgende Schicht der Eingangsschicht mit der Ausgangsschicht. D.h. eine ermittelte Zwischengröße der Eingangsschicht wird sowohl zur deren unmittelbar nachfolgenden Schicht und zur Ausgangsschicht weitergeleitet. Die zweite Überbrückungsverbindung (13b) verbindet die Eingangsschicht direkt mit der Ausgangsschicht.

Aufgrund der Überbrückungsverbindungen (13a,13b) können mehrere Pfade (10a,10b,10c) durch das tiefe neuronale Netz (10) bestimmt werden. Dies ist in Figur 1 rechts neben dem schematisch dargestellten tiefen neuronalen Netz (10) aufgezeigt.

Ein erster Pfad (10a) durch das tiefe neuronale Netz (10) verwendet nur die Eingangs-und Ausgangsschicht, die über die zweite Überbrückungsverbindung (13b) miteinander verbunden sind. D.h. bei einem Propagieren der Eingangsgröße durch das tiefe neuronale Netz (10) entlang des ersten Pfades (10a) wird nur die Eingangsschicht und die Ausgangsschicht verwendet.

Ein zweiter Pfad (10b) durch das tiefe neuronale Netz (10) verwendet die Eingangsschicht, die unmittelbar nachfolgende Schicht der Eingangsschicht und die Ausgangsschicht, die über die Verbindung (12) und die erste Überbrückungsverbindung (13a) miteinander verbunden sind. Die unmittelbar nachfolgende Schicht der Eingangsschicht wird im Folgenden als zweite Schicht und deren unmittelbar nachfolgende Schicht wird als dritte Schicht bezeichnet.

Der Unterschied zwischen dem ersten und zweiten Pfad ist, dass der zweite Pfad (10b) um eine Schicht länger ist als der erste Pfad (10a).

Ein weiterer Pfad (10c) kann durch Verwendung jeder Schicht des tiefen neuronalen Netzes (10), die miteinander nur durch die vorwärtsgerichtet Verbindungen (12) miteinander verbunden sind, definiert sein.

Wenn die Eingangsgröße (x) entlang des ersten Pfades (10a) durch das tiefe neuronale Netz (10) propagiert wird, liegt eine Ausgangsgröße (y) bereits nach zwei Zeitschritten vor. Denn innerhalb eines ersten Zeitschrittes wird die Eingangsgröße (x) in der Eingangsschicht verarbeitet und als eine Zwischengröße ausgegeben. Da der erste Pfad (10a) durch die zweite Überbrückungsverbindung (13b) definiert ist, wird die Zwischengröße der Eingangsschicht zum nachfolgenden Zeitschritt durch die Ausgangsschicht verarbeitet. D.h. bereits nach zwei Zeitschritten liegt eine Ausgangsgröße vor, obwohl das gesamte tiefe neuronale Netz durch seine Abfolge der Schichten, die jeweils ein Zeitschritt zur Verarbeitung benötigen, also insgesamt min. 4 Zeitschritte benötigt, um die Ausgangsgröße (y) auszugeben.

Es sei angemerkt, dass wie in Figur 1 dargestellt, die Ausgangsschicht des tiefen neuronalen Netzes (10) die Ausgangsgröße (y) abhängig von drei Zwischengrößen ermittelt, doch bei Verwendung des ersten Pfades (10a) abhängig von nur einer Zwischengröße ermittelt. Hierbei werden die zwei weiteren Zwischengrößen nicht berücksichtig, da der erste Pfad (10a) nicht durch die jeweils dafür benötigten Schichten geht.

Für den Fall, dass die Eingangsgröße (x) entlang des zweiten Pfades (10b) durch das tiefe neuronale Netz propagiert wird, verarbeitet ebenfalls zum ersten Zeitschritt die Eingangsschicht die Eingangsgröße (x) und gibt ihre Zwischengröße aus. Zum zweiten Zeitschritt ermittelt die zweite Schicht abhängig von der Zwischengröße der Eingangsschicht ihre Zwischengröße. Anschließend wird zum dritten Zeitschritt aufgrund der ersten Überbrückungsverbindung (13a) die ausgegebene Zwischengröße der zweiten Schicht durch die Ausgangsschicht verarbeitet. D.h. nach bereits drei Zeitschritten liegt eine Ausgangsgröße des tiefen neuronalen Netzes vor.

Die gleiche Erläuterung kann auch für das Propagieren der Eingangsgröße (x) entlang des dritten Pfades verwendet werden. Hierbei folgt, dass erst nach dem vierten Zeitschritt die Ausgangsgröße vorliegt, da die Eingangsgröße durch alle vier Schichten propagiert werden muss.

Durch das Verwenden der Pfade, kann eine deutlich höhere Responsivität des tiefen neuronalen Netzes erzielt werden, da nicht abgewartet werden muss, bis die Eingangsgröße vollständig durch jede der Schichten bis zum Ausgang propagiert wurde.

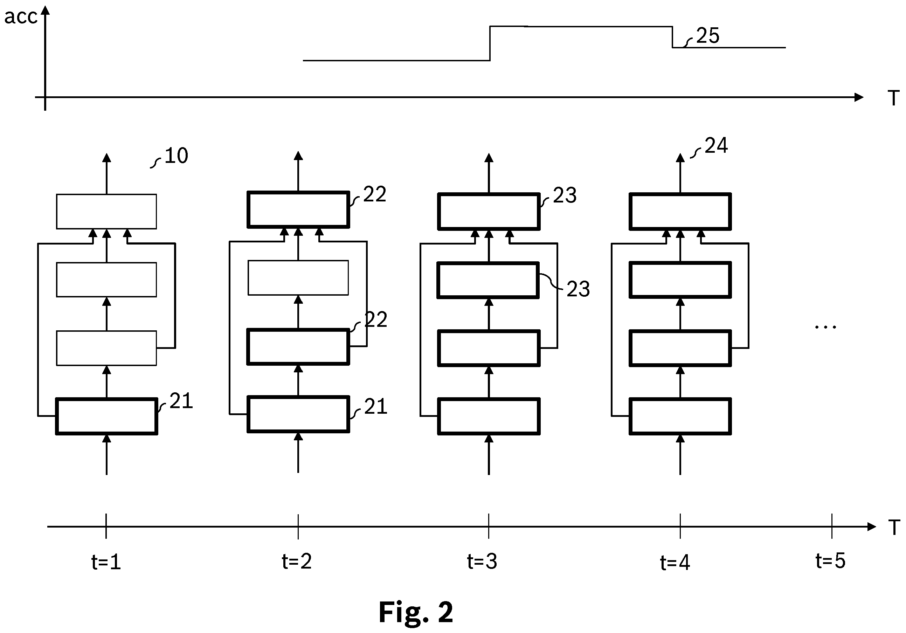

Figur 2 zeigt eine vereinfachte Darstellung eines Verfahrens zum teilweise oder vollständig parallelisierten Ausführen (engl. streaming rollouts) des tiefen neuronalen Netzes (10), bei welchem die Eingangsgröße gleichzeitig entlang der drei Pfade (10a,10b,10c) durch das tiefe neuronale Netz (10) propagiert wird.

Das Verfahren zum parallelisierten Ausführen des tiefen neuronalen Netzes (10) ist dadurch gekennzeichnet, dass ein Teil der oder alle Schichten parallelisiert und unabhängig voneinander betrieben werden.

Zu einem ersten Zeitpunkt (t=1) einer Abfolge (T) von Zeitpunkten wird die Eingangsgröße (x) in der Eingangsschicht verarbeitet, in Figur 2 durch die Hervorhebung (21) der Eingangsschicht dargestellt.

Dadurch, dass die einzelnen Schichten des tiefen neuronalen Netzes (10) voneinander unabhängig betrieben werden, wird im unmittelbar nachfolgenden Zeitpunkt (t=2) des ersten Zeitpunktes (t=1) sowohl diese Zwischengröße der Eingangsschicht in der zweiten Schicht als auch diese Zwischengröße in der Ausgangsschicht verarbeitet. Diese parallelisierte Berechnung der zweiten Schicht und der Ausgangsschicht sind durch die Hervorhebungen (22) dieser Schichten in Figur 2 dargestellt. Es sei angemerkt, dass durch die zweite Überbrückungsverbindung die Zwischengröße der Eingangsschicht der Ausgangsschicht bereitgestellt wird. D.h. zum zweiten Zeitpunkt (t=2) ermittelt die Ausgangsschicht nur abhängig von der Zwischengröße der Eingangsschicht die Ausgangsgröße (y).

Für den Fall, dass das tiefe neuronale Netz (10) die Eingangsgröße (x) klassifiziert, gibt die Ausgangsschicht eine Klassifikation aus, deren Genauigkeit (acc) oder Zuverlässigkeit in dem darüber liegenden Diagramm beispielhaft dargestellt ist.

Zum dritten Zeitpunkt (t=3) wird die ermittelte Zwischengröße der zweiten Schicht sowohl in der Ausgangsschicht als auch in der dritten Schicht weiterverarbeitet. Vorzugsweise ermittelt zum dritten Zeitpunkt (t=3) die Ausgangsschicht abhängig von der Zwischengröße der Eingangsschicht, die bereits zum ersten Zeitschritt (t=1) ermittelt wurde und der Zwischengröße der zweiten Schicht die Ausgangsgröße (y). Dass die dritte Schicht zum dritten Zeitpunkt (t=3) ihre Zwischengröße ermittelt, ist in Figur 2 durch die Hervorhebung (23) dargestellt. Die Ausgangsschicht ist ebenfalls mit der Hervorhebung (23) versehen, da diese abhängig von der Zwischengröße der zweiten Schicht die Ausgangsgröße aktualisiert.

Für den Fall, dass das tiefe neuronale Netz (10) eine Klassifikation der Eingangsgröße (x) durchführt, führt das Ermitteln der Ausgangsgröße in der Ausgangsschicht abhängig von zwei Zwischengrößen dazu, dass die Klassifikation genauer bzw. zuverlässiger sein wird. Dies ist in dem darüber liegenden Diagramm dadurch dargestellt, dass eine Kurve (25), die einen Verlauf der Genauigkeit (acc) oder Zuverlässigkeit der Ausgangsgröße (y) beschreibt, leicht ansteigt.

Vorzugsweise ermittelt zum vierten Zeitpunkt (t=4) die Ausgangsschicht nun abhängig von allen ihr bereitgestellten Zwischengrößen die Ausgangsgröße. (Dies ist in Figur 2 durch das Bezugszeichen 24 dargestellt). Da aufgrund einer Überparametrisierung des tiefen neuronalen Netzes (10) durch Verwenden zu vieler Schichten der Fall auftreten kann, dass die Genauigkeit oder die Zuverlässigkeit der Ausgangsgröße degradiert, fällt die Kurve im darüber liegenden Diagramm leicht ab. Es kann aber auch der Fall auftreten, das die dritte Schicht weitere wertvolle Informationen beisteuert, die zu einer noch genaueren Klassifikation führen können. Folglich würde dann die Kurve (25) weiter steigen.

Denkbar ist, dass zu jedem Zeitpunkt (t=1,..,4) immer die gleiche Eingangsgröße (x) an der Eingangsschicht anliegt, bis alle Pfade berechnet wurden. Es sei angemerkt, dass in einem alternativen Ausführungsbeispiel der Figur 2 zu jedem Zeitpunkt (t=2,3,4) zeitlich nachfolgende Eingangsgrößen des tiefen neuronalen Netzes anliegen und durch das tiefe neuronale Netz schrittweise propagiert werden können. Dann sind zu den jeweiligen Zeitpunkten nicht nur die Schichten aktiv, welche zur Verarbeitung der Zwischengrößen benötigt werden, die der Eingangsgröße (x) zuordenbar sind, sondern auch die Schichten die die Zwischengrößen, die nachfolgenden Eingangsgrößen zuordenbar sind, verarbeiten. Damit kann eine höhere Auslastung des tiefen neuronalen Netzes (10) erreicht werden.

Für den Fall, dass das Netz eine Regression anstatt einer Klassifikation ausführt, kann die Kurve (25) beispielhaft einen interpolierten Verlauf der Werte der Ausgangsgröße (y) des tiefen neuronalen Netzes (10) darstellen.

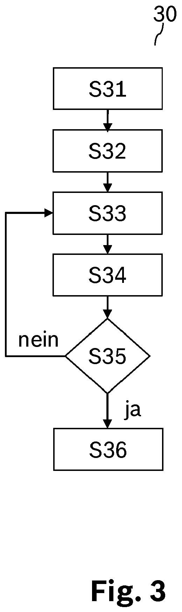

Figur 3 zeigt eine schematische Darstellung eines Flussdiagramms zum Ausführen des Verfahrens zum Betreiben eines neuronalen Netzes.

Das Verfahren (30) beginnt mit Schritt S31. In Schritt S31 wird ein bereitgestelltes tiefes neuronales Netz mit zumindest einer Überbrückungsverbindung, beispielsweise das tiefe neuronale Netz (10) gemäß Figur 1, in eine Mehrzahl von Pfaden (10a, 10b, 10c) zerlegt. Gewichte der einzelnen Schichten können von den Pfaden (10a,10b) geteilt werden. Zusätzlich können die Pfade auch durch ein Einschränken der Schichten auf ein geringeres Set von Parametern, insbesondere Gewichte, definiert werden.

Optional kann nach Schritt S31 Schritt S32 ausgeführt werden. In Schritt S32 wird das tiefe neuronale Netz angelernt. Unter Anlernen wird verstanden, dass eine Parametrisierung des tiefen neuronalen Netzes abhängig von bereitgestellten Trainingsdaten und den Trainingsdaten jeweils zugeordneten Label derart angepasst wird, dass eine Kostenfunktion hinsichtlich eines Trainingskriteriums optimal wird. Das tiefe neuronale Netz kann angelernt werden, indem die einzelnen Pfade getrennt, insbesondere unabhängig voneinander angelernt werden. D.h. für jeden der Pfade wird beim Anlernen die Kostenfunktion (engl. loss function) ausgewertet. Dadurch entstehen parallele Pfade der Informationsverarbeitung, so dass bei einer Störung in einem Pfad, die anderen Pfade die ursprünglichen Ausgabewerte des neuronalen Netzes aufrechterhalten können.

Es sei ferner angemerkt, dass für Zeitreihen als Eingangsgrößen diejenigen Pfade in Gruppen zusammengefasst werden können, die gleich viel Zeitschritte benötigen, und mit einer Kostenfunktion versehen werden.

Zusätzlich oder alternativ kann eine Gruppe von Pfade oder alle Pfade gemeinsam angelernt werden. Hierbei setzt sich dann die Kostenfunktion aus den einzelnen, vorzugsweise gewichteten, Kostenfunktionen der einzelnen Pfade zusammen.

Die Anzahl der beim Anlernen verwendeten verschieden Pfade kann entsprechend der gewünschten Granularität der verfügbaren Ressourcen gewählt werden.

Denkbar ist auch, dass bereits beim Anlernen, insbesondere kurz vor Beendigung des Anlernens, geprüft wird, welche Pfade sinnvoll sind. Beispielsweise wird geprüft, ob die Verwendung einer der Pfade zu einer Verbesserung der Qualität der Ausgangsgröße beitragen kann. Wird festgestellt, dass einer der Pfade zu keiner Verbesserung beiträgt, kann dieser Pfad verworfen oder die entsprechende Schicht, durch die sich der Pfad von den anderen Pfaden unterschiedet, aus dem tiefen neuronalen Netz entfernt werden. Der vorteilhafte Effekt hierbei ist, dass bereits beim Anlernen die Architektur des tiefen neuronalen Netzes optimiert wird.

Alternativ oder zusätzlich kann mittels Bestärkenden Lernens (engl. reinforcement learning) erlernt werden, abhängig von der Eingangsgröße zu ermitteln, welcher Pfad der geeignetste für die jeweilige Eingangsgröße ist.

Nachdem Schritt S31 oder der optionale Schritt S32 beendet wurde folgt Schritt S33. Hierin wird initial einer der Pfade der Mehrzahl der Pfade die in Schritt S31 ausgewählt wurden, gewählt. Vorzugsweise wird initial der kürzeste Pfad durch das tiefe neuronale Netz gewählt, also derjenige Pfad, bei welchem am wenigsten Schichten des tiefen neuronalen Netzes (10) benötigt werden, um die Eingangsgröße (x) durch das tiefe neuronale Netz (10) zu propagieren. Alternativ kann der initiale und/oder bei einem wiederholten Ausführen des Schrittes S33 ein weiterer Pfad mittels des erlernten Zusammenhangs durch das Bestärkende Lernen aus Schritt S32 gewählt werden. Das tiefe neuronale Netz kann dann gemäß dem gewählten Pfad konfiguriert werden. Falls der weitere Pfad gewählt wurde, kann das neuronale Netz gemäß dem weiteren Pfad umkonfiguriert wird. Unter Konfigurieren des tiefen neuronalen Netzes kann verstanden werden, dass nur diejenigen Schichten verwendet werden, die zu dem jeweiligen Pfad gehören. Denkbar ist auch, dass ein weiteres neuronales Netz verwendet wird, das gemäß dem weiteren Pfad konfiguriert wird, sodass die Eingangsgröße im anschließenden Schritt durch das weitere neuronale Netz propagiert werden kann.

Daraufhin wird in dem nachfolgenden Schritt S34 eine Eingangsgröße durch das tiefe neuronale Netz, welches konfiguriert ist gemäß des ausgewählten Pfades aus Schritt S33, propagiert, vgl. Erläuterungen zu Figur 1. Beispielweise ist das tiefe neuronale Netz gemäß dem ausgewählten Pfad konfiguriert, indem diejenige Schicht, die nicht zum ersten Pfad gehört oder nicht zum einem der weiteren Pfade gehört, deaktiviert werden.

In Schritt S35 wird daraufhin geprüft, ob eine Ausgangsgröße des neuronalen Netzes, die nach dem Propagieren der Eingangsgröße in Schritt S34 am Ausgang des tiefen neuronalen Netzes ausgegeben wird, ein vorgebbares Kriterium erfüllt. Beispielsweise kann das vorgebbares Kriterium bei einer Klassifikation sein, dass zwischen der Klasse mit höchster Wahrscheinlichkeit und den weiteren Klassen ein vorgebbarer mindest Klassifikationsunterschied vorliegen muss, bspw. der Ausgabewert der Klasse mit dem höchstem Ausgabewert soll sich min. um 20% von dem der anderen Klassen unterscheiden. Zusätzlich oder alternativ kann geprüft werden, ob ein vorgebbares Ressourcenkontingent, wie ein Energie-/Zeit-budget oder Speicherkontingent, bereits durch das Propagieren nach Schritt S34 aufgebraucht ist. Vorzugsweise charakterisiert daher das Kriterium einen Schwellwert, bspw. eine Konfidenz oder Varianz der Ausgangsgröße (y) und/oder das Ressourcenkontingent. Zusätzlich oder alternativ kann das Kriterium eine Veränderung der jeweils ausgegebenen Ausgangsgrößen der unterschiedlichen Pfade charakterisieren. Wenn sich bspw. die Ausgangsgröße um weniger als 5% verändert, ist das Kriterium erfüllt.

Falls das Kriterium gemäß Schritt S34 nicht erfüllt sein sollte (Fig. 3: Verzweigung "nein"), wird erneut Schritt S33 ausgeführt, wobei nun ein weiterer Pfad aus der Mehrzahl der ausgewählten Pfade ausgewählt wird. Dieser weitere Pfad ist zumindest um eine Schicht länger als der vorherige ausgewählte Pfad. Dadurch wird effektiv eine weitere Schicht dem tiefen neuronalen Netz zugeschaltet, die die Ausdrucksmächtigkeit des tiefen neuronalen Netzes erhöht, wodurch eine genauere Ausgangsgröße, insbesondere eine verbesserte Klassifikation, ermittelt werden kann. Das neuronale Netz wird dann gemäß dem weiteren Pfad umkonfiguriert.

Der weitere Pfad kann zufällig aus der Menge aller möglichen Pfade gezogen bzw. einzelne Schichten können mit einer bestimmten Wahrscheinlichkeit ausgelassen werden. Vorzugsweise wird dieses zufällige Ziehen beim Anlernen verwendet. Während der Inferenz ist ein Nutzen des zufälligen Ziehens, dass Berechnungen einer Streuung der Ausgangsgrößen durchführbar sind.

Zudem kann durch die explizite Gewichtung, insbesondere über einen Kostenterm/- funktion während des Anlernens, der einzelnen Pfade und/oder Gruppen an Pfaden ein Einfluss auf die Eigenschaften eines Netzwerks genommen werden. Zum Beispiel können diejenigen Pfade besonders stark gewichtet werden, welche isoliert besonders leistungsfähig sein sollen und/oder weniger störanfällig sind. Ebenfalls können Pfade anhand ihres Ressourcenbedarfs, z.B. Energiebedarf, gewichtet werden.

Je komplexer die Eingangsgröße (x) ist, bzw. je mehr Ressourcen zur Verfügung stehen, werden bevorzugt mehr Schichten für die Berechnung des Ausgangssignals, insbesondere längere Pfade, verwendet.

Nach Beendigung des Schrittes S33 wird Schritt S34 erneut durchgeführt.

Vorzugsweise werden beim wiederholten Ausführen des Schrittes S34 Zwischenergebnisse, die beim Propagieren entlang des ersten Pfades ermittelt wurden, wiederverwendet, wodurch Parameter des tiefen neuronalen Netzes nicht wiederholt in die Recheneinheit geladen werden müssen. Ferner müssen bereits durchgeführte Berechnungen nicht erneut durchgeführt werden.

Falls in Schritt S35 dem Kriterium nun entsprochen wird, folgt Schritt S36. In Schritt S36 kann beispielsweise abhängig von der Ausgangsgröße des tiefen neuronalen Netzes ein zumindest teilautonomer Roboter angesteuert werden.

In einer alternativen Ausführungsform des Verfahrens (30) wird das tiefe neuronale Netz (10) gemäß Figur 2 parallelisiert betrieben.

Hierbei kann Schritt S35 jedes Mal ausgeführt werden, wenn das Netz eine Ausgangsgröße (y) ausgibt, insbesondere nach jedem Zeitschritt (t=2,3,4). Wenn Schritt S35 nein ausgibt, dann wird das tiefe neuronale Netz weiter gemäß dem Vorgehen nach Figur 2 betrieben.

Anders als in Figur 3 muss in Schritt S33 das neuronal Netz nicht für den gewählten, weiteren Pfad umkonfiguriert werden, sondern es müssen lediglich die notwendigen Berechnungen des nachfolgenden Zeitschrittes ausgeführt werden, gemäß des beschriebenen Vorgehens der Berechnungen in Figur 2. Bspw. ergibt zum Zeitpunkt t=2 das Prüfen des Schrittes S35, dass die Ausgangsgröße nicht dem Kriterium entspricht, werden die Berechnungen des Zeitpunktes t=3 ausgeführt, also die Schichten mit Hervorhebung (23) führen nun ihre Berechnungen aus.

Wenn nach Schritt S35 entschieden wurde, dass die Ausgangsgröße dem Kriterium entspricht, wird wie in Figur 3 Schritt S36 ausgeführt.

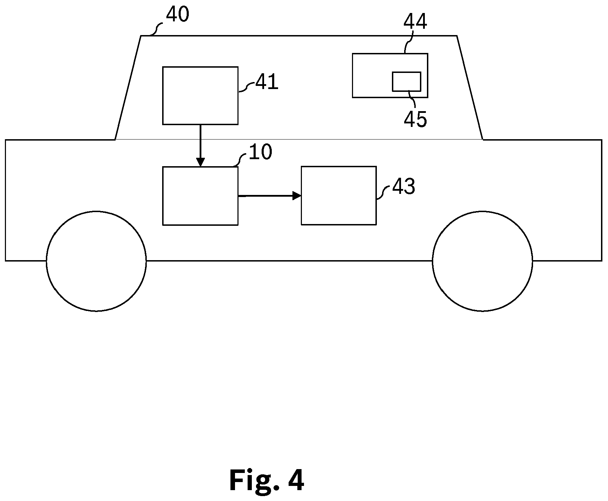

Der zumindest teilautonome Roboter ist in Figur 4 durch ein zumindest teilautonomes Fahrzeug (40) schematisch dargestellt. In einem weiteren Ausführungsbeispiel kann der zumindest teilautonome Roboter ein Service-, Montage- oder stationärer Produktionsroboter, alternativ ein autonomes Flugobjekt, wie eine Drohne, sein.

Das zumindest teilautonome Fahrzeug (40) umfasst eine Erfassungseinheit (41). Die Erfassungseinheit (41) kann zum Beispiel eine Kamera sein, welche eine Umgebung des Fahrzeugs (40) erfasst. Die Erfassungseinheit (41) ist mit dem tiefen neuronalen Netz (10) verbunden. Das tiefe neuronale Netz (10) ermittelt abhängig von einer bereitgestellten Eingangsgröße, bereitgestellt von der Erfassungseinheit (41), und in Abhängigkeit einer Mehrzahl von Parametern die Ausgangsgröße gemäß dem Verfahren nach Figur 3. Die Ausgangsgröße wird an eine Steuerungseinheit (43) weitergeleitet werden.

Die Steuerungseinheit (43) steuert in Abhängigkeit der Ausgangsgröße (y) des tiefen neuronalen Netzes (10) einen Aktor, vorzugsweise steuert diesen den Aktor derart, dass das Fahrzeug (40) ein kollisionsfreies Manöver ausführt. Im ersten Ausführungsbeispiel kann der Aktor ein Motor oder ein Bremssystem des Fahrzeugs (40) sein. In einem der weiteren Ausführungsbeispiel kann der teilautonome Roboter ein Werkzeug, eine Werkmaschine oder ein Fertigungsroboter sein. Ein Material eines Werkstückes kann mittels des tiefen neuronalen Netzes (10) klassifiziert werden. Der Aktor kann hierbei z.B. ein Motor, der einen Schleifkopf betreibt, sein.

Ferner umfasst das Fahrzeug (40), insbesondere der teilautonome Roboter, eine Recheneinheit (44) und ein maschinenlesbares Speicherelement (45). Auf dem Speicherelement (45) kann ein Computerprogramm gespeichert sein, welches Befehle umfasst, die beim Ausführen der Befehle auf der Recheneinheit (44) dazu führen, dass die Recheneinheit (44) das Verfahren (30) gemäß Figur 3 ausführt.

## Patentansprüche

1. Computerimplementiertes Verfahren (30) zum Betreiben eines tiefen neuronalen Netzes (10), welches zumindest eine Überbrückungsverbindung (engl. skip connection) (13a,13b) aufweist und welches abhängig von einer Eingangsgröße (x) eine Ausgangsgröße (y) ermittelt, wobei diejenige Schicht, die die Eingangsgröße (x) erhält, eine Eingangsschicht ist und diejenige Schicht, die die Ausgangsgröße (y) ausgibt, eine Ausgangsschicht ist, wobei ein Pfad eine unterbrechungsfreie, vorwärtsgerichtet Abfolge einer Mehrzahl von Schichten des tiefen neuronalen Netzes charakterisiert und der Pfad charakterisiert, wie diese Mehrzahl der Schichten des tiefen neuronalen Netzes nacheinander verbunden sind, um die Eingangsgröße durch das tiefe neuronale Netz beginnend bei der Eingangsschicht bis zur Ausgangsschicht zu propagieren, das Verfahren (30) umfassend die Schritte:
Auswählen eines ersten Pfades (10a) durch das tiefe neuronale Netz (10) entlang der Überbrückungsverbindung (13a,13b);
Ermitteln einer Ausgangsgröße mittels Propagieren einer Eingangsgröße (x) des tiefen neuronalen Netzes (10) entlang des ersten Pfades; und
Prüfen, ob die Ausgangsgröße einem vorgebbaren Kriterium entspricht, wobei dann, wenn das vorgebbare Kriterium nicht erfüllt ist, ein zweiter Pfad (10b,10c) durch das tiefe neuronale Netz (10), der sich vom ersten Pfad (10a) unterscheidet, gewählt wird, und die Ausgangsgröße mittels Propagieren der Eingangsgröße (x) des tiefen neuronalen Netzes (10) entlang des zweiten Pfades (10b, 10c) ermittelt wird,
wobei dann, wenn das vorgebbare Kriterium erfüllt wurde, abhängig von der Ausgangsgröße des tiefen neuronalen Netzes eine Steuergröße ermittelt wird, wobei die Steuergröße zum Steuern eines Aktors eines technischen Systems verwendet wird, wobei das technische System eine zumindest teilautonome Maschine, ein zumindest teilautonomes Fahrzeug, ein Roboter, ein Werkzeug, eine Werkmaschine oder ein Flugobjekt ist.

2. Verfahren nach Anspruch 1, wobei beim Propagieren der Eingangsgröße (x) entlang der Pfade, diejenigen Schichten (11) des neuronalen Netzes (10), die nicht für den jeweiligen verwendeten Pfad benötigt werden, deaktiviert sind und erst dann aktiviert werden, wenn diejenige Schicht für den jeweiligen Pfad benötigt wird.

3. Verfahren nach Anspruch 1 oder 2, wobei beim Propagieren der Eingangsgröße (x) entlang des zweiten Pfades (10b,10c), Zwischengrößen derjenigen Schichten (11), die beim Propagieren entlang des ersten Pfades (10a) ermittelt wurden, wiederverwendet werden.

4. Verfahren nach einem der vorherigen Ansprüche, wobei beim Propagieren entlang des zweiten Pfades (10b,10c) nur die Zwischengrößen derjenigen Schichten, um die sich der zweite Pfad (10b,10c) vom ersten Pfad (10a) unterscheidet, ermittelt werden, und
wobei beim Propagieren entlang des zweiten Pfades (10b,10c) des Weiteren diejenigen Schichten des zweiten Pfades, welche mit mehr als einer vorherigen Schicht verbunden sind und auch im ersten Pfad (10a) enthalten waren, ihre Zwischengrößen abhängig von einer bereitgestellten Zwischengröße der jeweiligen unmittelbar vorhergehenden verbundenen Schicht des zweiten Pfades und einer vorherigen bereitgestellten Zwischengröße der unmittelbar vorhergehenden verbundenen Schicht des ersten Pfades, ermitteln.

5. Verfahren nach einem der vorherigen Ansprüche, umfassend folgende weitere Schritte:
Bereitstellen einer Mehrzahl unterschiedlicher Pfade durch das tiefe neuronale Netz;
Auswählen zumindest des ersten und zweiten Pfades aus der Mehrzahl der unterschiedlichen Pfade;
Ermitteln der Ausgangsgröße mittels Propagieren der Eingangsgröße des tiefen neuronalen Netzes gleichzeitig entlang zumindest des ersten und des zweiten Pfades,
wobei zuerst nacheinander die Zwischengrößen der gemeinsamen Schichten des ersten und des zweiten Pfades bis zu der Schicht, ab welcher sich die Abfolgen der Schichten der Pfade unterscheiden, ermittelt werden,
wobei die Zwischengrößen jeweils derjenigen verbleibenden Schichten des ersten Pfades und derjenigen verbleibenden Schichten des zweiten Pfades, die die gleiche Position in der Abfolge der Schichten der Pfade haben, parallel ermittelt werden,
wobei dann, wenn die Ausgangsgröße des ersten Pfades ausgegeben wird, das vorgebbare Kriterium geprüft wird,
wobei dann, wenn das Kriterium nicht erfüllt ist, das Propagieren fortgesetzt wird, bis die Ausgangsgröße des zweiten Pfades ausgegeben wird.

6. Verfahren nach einem der vorherigen Ansprüche, wobei das Auswählen der Pfade abhängig von der Eingangsgröße und/oder abhängig von einem vorgebbaren Energie-/Zeit-kontingent, dass maximal verbraucht werden darf, um die Eingangsgröße durch das tiefe neuronalen Netz (10) zu propagieren, ist, und/oder
wobei das vorgebbare Kriterium eine vorgebbare min. Genauigkeit oder Zuverlässigkeit der Ausgangsgröße charakterisiert.

7. Verfahren nach einem der vorherigen Ansprüche, wobei jeder Pfad des tiefen neuronalen Netzes (10) getrennt voneinander angelernt und/oder zumindest eine Gruppe von Pfaden gemeinsam angelernt werden.

8. Vorrichtung (44), die eingerichtet ist, das Verfahren nach einem der vorherigen Ansprüche auszuführen.

9. Computerprogramm, welches Befehle umfasst, die eingerichtet sind, beim Ausführen dieser Befehle auf einem Computer, diesen Computer zu veranlassen, das Verfahren nach einem der vorherigen Ansprüche 1 bis 7 auszuführen.

10. Maschinenlesbares Speicherelement (45), auf welchem das Computerprogramm nach Anspruch 9 hinterlegt ist.

## Claims

1. Computer-implemented method (30) for operating a deep neural network (10) that has at least one skip connection (13a, 13b) and that determines an output variable (y) depending on an input variable (x), wherein the layer that receives the input variable (x) is an input layer and the layer that outputs the output variable (y) is an output layer, wherein a path characterizes an uninterrupted, forward-directed sequence of a multiplicity of layers of the deep neural network and the path characterizes how this multiplicity of layers of the deep neural network are connected in succession in order to propagate the input variable through the deep neural network starting at the input layer up to the output layer, the method (30) comprising the following steps:
selecting a first path (10a) through the deep neural network (10) along the skip connection (13a, 13b);
determining an output variable by propagating an input variable (x) of the deep neural network (10) along the first path; and
checking whether the output variable corresponds to a predefinable criterion, wherein, if the predefinable criterion is not met, a second path (10b, 10c) through the deep neural network (10), which differs from the first path (10a), is selected and the output variable is determined by propagating the input variable (x) of the deep neural network (10) along the second path (10b, 10c),
wherein, if the predefinable criterion has been met, a control variable is determined depending on the output variable of the deep neural network, wherein the control variable is used to control an actuator of a technical system, wherein the technical system is an at least partially autonomous machine, an at least partially autonomous vehicle, a robot, a tool, a machine tool or a flying object.

2. Method according to Claim 1, wherein, when the input variable (x) is propagated along the paths, the layers (11) of the neural network (10) that are not required for the respective path used are deactivated and are activated only when this layer is required for the respective path.

3. Method according to Claim 1 or 2, wherein, when the input variable (x) is propagated along the second path (10b, 10c), intermediate variables of the layers (11) that were determined during propagation along the first path (10a) are reused.

4. Method according to one of the preceding claims, wherein, during propagation along the second path (10b, 10c), only the intermediate variables of the layers in terms of which the second path (10b, 10c) differs from the first path (10a) are determined, and
wherein, during propagation along the second path (10b, 10c), the layers of the second path that are connected to more than one previous layer and were also contained in the first path (10a) furthermore determine their intermediate variables depending on a provided intermediate variable of the respective immediately preceding connected layer of the second path and a previous provided intermediate variable of the immediately preceding connected layer of the first path.

5. Method according to one of the preceding claims, comprising the following further steps:
providing a multiplicity of different paths through the deep neural network;
selecting at least the first and second paths from the multiplicity of different paths;
determining the output variable by propagating the input variable of the deep neural network simultaneously along at least the first and second paths,
wherein the intermediate variables of the common layers of the first and second paths up to the layer starting from which the sequences of the layers of the paths differ are first determined in succession,
wherein the intermediate variables of each of the remaining layers of the first path and the remaining layers of the second path that have the same position in the sequence of the layers of the paths are determined in parallel,
wherein, when the output variable of the first path is output, the predefinable criterion is checked,
wherein, if the criterion is not met, the propagation is continued until the output variable of the second path is output.

6. Method according to one of the preceding claims, wherein the selection of the paths is dependent on the input variable and/or dependent on a predefinable maximum energy/time quota that is allowed to be consumed in order to propagate the input variable through the deep neural network (10), and/or
wherein the predefinable criterion characterizes a predefinable minimum accuracy or reliability of the output variable.

7. Method according to one of the preceding claims, wherein each path of the deep neural network (10) is trained separately from one another and/or at least one group of paths is trained together.

8. Device (44) configured to carry out the method according to one of the preceding claims.

9. Computer program comprising instructions that, when these instructions are executed on a computer, are configured to cause this computer to carry out the method according to one of preceding Claims 1 to 7.

10. Machine-readable storage element (45) on which the computer program according to Claim 9 is stored.

## Revendications

1. Procédé (30) mis en oeuvre par ordinateur, permettant de faire fonctionner un réseau neuronal profond (10) qui présente au moins une connexion de saut (en anglais « skip connection ») (13a, 13b) et qui établit une grandeur de sortie (y) en fonction d'une grandeur d'entrée (x), dans lequel la couche qui reçoit la grandeur d'entrée (x) est une couche d'entrée, et la couche qui sort la grandeur de sortie (y) est une couche de sortie, dans lequel un chemin caractérise une séquence sans interruption, dirigée vers l'avant, d'une pluralité de couches du réseau neuronal profond, et le chemin caractérise comment cette pluralité des couches du réseau neuronal profond est reliée les unes après les autres pour propager la grandeur d'entrée à travers le réseau neuronal profond en commençant par la couche d'entrée jusqu'à la couche de sortie, le procédé (30) comprenant les étapes consistant à :
sélectionner un premier chemin (10a) à travers le réseau neuronal profond (10) le long de la connexion de saut (13a, 13b) ;
établir une grandeur de sortie au moyen de la propagation d'une grandeur d'entrée (x) du réseau neuronal profond (10) le long du premier chemin ; et
vérifier si la grandeur de sortie correspond à un critère prédéfinissable, dans lequel, si le critère prédéfinissable n'est pas satisfait, un deuxième chemin (10b, 10c) à travers le réseau neuronal profond (10), qui est différent du premier chemin (10a), est sélectionné, et la grandeur de sortie est établie au moyen de la propagation de la grandeur d'entrée (x) du réseau neuronal profond (10) le long du deuxième chemin (10b, 10c),
dans lequel ensuite, si le critère prédéfinissable a été satisfait, une grandeur de commande est établie en fonction de la grandeur de sortie du réseau neuronal profond, la grandeur de commande étant utilisée pour commander un actionneur d'un système technique, le système technique étant une machine au moins semi-autonome, un véhicule au moins semi-autonome, un robot, un outil, une machine-outil ou un objet volant.

2. Procédé selon la revendication 1, dans lequel lors de la propagation de la grandeur d'entrée (x) le long des chemins, les couches (11) du réseau neuronal (10) qui ne sont pas nécessaires au chemin utilisé respectif sont désactivées et ne seront activées que si la couche en question est nécessaire au chemin respectif.

3. Procédé selon la revendication 1 ou 2, dans lequel lors de la propagation de la grandeur d'entrée (x) le long du deuxième chemin (10b, 10c), des grandeurs intermédiaires des couches (11) qui ont été établies lors de la propagation le long du premier chemin (10a) sont réutilisées.

4. Procédé selon l'une quelconque des revendications précédentes, dans lequel, lors de la propagation le long du deuxième chemin (10b, 10c), seules les grandeurs intermédiaires des couches par lesquelles le deuxième chemin (10b, 10c) se distingue du premier chemin (10a) sont établies, et
dans lequel, lors de la propagation le long du deuxième chemin (10b, 10c), les couches du deuxième chemin qui sont reliées à plus d'une couche précédente et qui ont aussi été contenues dans le premier chemin (10a) établissent de plus leurs grandeurs intermédiaires en fonction d'une grandeur intermédiaire fournie de la couche reliée directement précédente respective du deuxième chemin et d'une grandeur intermédiaire fournie précédemment de la couche reliée directement précédente du premier chemin.

5. Procédé selon l'une quelconque des revendications précédentes, comprenant les étapes supplémentaires suivantes consistant à :
fournir une pluralité de différents chemins à travers le réseau neuronal profond ;
sélectionner au moins le premier et le deuxième chemin parmi la pluralité des différents chemins ;
établir la grandeur de sortie au moyen de la propagation de la grandeur d'entrée du réseau neuronal profond en même temps le long au moins du premier et du deuxième chemin,
dans lequel on établit d'abord les grandeurs intermédiaires des couches communes du premier et du deuxième chemin jusqu'à la couche à partir de laquelle les séquences des couches des chemins se distinguent,
dans lequel les grandeurs intermédiaires respectivement des couches restantes du premier chemin et des couches restantes du deuxième chemin qui ont la même position dans la séquence des couches des chemins sont établies en parallèle,
dans lequel ensuite, lorsque la grandeur de sortie du premier chemin est sortie, le critère prédéfinissable est vérifié,
dans lequel, si le critère n'est pas satisfait, la propagation se poursuit jusqu'à ce que la grandeur de sortie du deuxième chemin soit sortie.

6. Procédé selon l'une quelconque des revendications précédentes, dans lequel la sélection des chemins dépend de la grandeur d'entrée et/ou dépend d'un contingent d'énergie/temps prédéfinissable qui peut être consommé au maximum pour propager la grandeur d'entrée à travers le réseau neuronal profond (10), et/ou
dans lequel le critère prédéfinissable caractérise une précision ou fiabilité minimale prédéfinissable de la grandeur de sortie.

7. Procédé selon l'une quelconque des revendications précédentes, dans lequel chaque chemin du réseau neuronal profond (10) est appris indépendamment des autres et/ou au moins un groupe de chemins est appris ensemble.

8. Dispositif (44), conçu pour exécuter le procédé selon l'une quelconque des revendications précédentes.

9. Programme informatique, comprenant des instructions qui, lorsque ces instructions sont exécutées sur un ordinateur, sont conçues pour amener cet ordinateur à exécuter le procédé selon l'une quelconque des revendications précédentes 1 à 7.

10. Elément de stockage (45) lisible par machine, sur lequel est stocké un programme informatique selon la revendication 9.
